# DEMANDE DE BREVET EUROPEEN

(11) **EP 3 643 858 A1**
(43) Date de publication de la demande: **29.04.2020**
(21) Numéro de dépôt: 19205097.9
(22) Date de dépôt: 24.10.2019
(51) Int. Cl.: E05B 9/00, E05B 47/00

(54) **BOITIER D'APPAREIL ELECTRONIQUE**

(30) Priorité: 25.10.2018 FR 1859871
(71) Demandeur: HAVR, 60880 Jaux (FR)
(72) Inventeur: DUPREZ, Guillaume, 60280 MARGNY LES COMPIEGNE (FR)
(74) Mandataire: Plasseraud IP

(57) **Abrégé**

Boîtier d'appareil électronique (1), comprenant :
- une portion de réception d'un moyen de stockage d'électricité (3),
- un capot (5) amovible, recouvrant la portion de réception d'un moyen de stockage d'électricité (3), apte à passer d'une position de fermeture à une position d'ouverture, et comportant un système de guidage en coulissement (51) du moyen de stockage d'électricité (4),
- des moyens (6) de guidage du capot amovible (5) entre la position de fermeture et la position d'ouverture,
- ledit boitier d'appareil électronique (1) étant configuré pour permettre l'extraction et/ou l'insertion du moyen de stockage de l'électricité (4) selon la séquence suivante :
- une première étape dans laquelle on écarte le capot amovible (5), et
- dans ladite position d'ouverture, une deuxième étape dans laquelle on extrait ou on insère le moyen de stockage d'électricité (4) par coulissement le long du système de guidage (51).

## Description

La présente invention concerne un boîtier d'appareil électronique, et notamment de serrure électronique.

Le domaine de l'invention est celui des boîtiers d'appareil électronique, et notamment de serrures électroniques, nécessitant de pouvoir être ouverts pour assurer la maintenance de certains composants.

Les appareils électroniques comportent généralement un boîtier logeant les différents éléments composant ledit appareil électronique, permettant de loger lesdits éléments tout en les protégeant des agressions extérieures.

Un tel boîtier, afin de permettre la maintenance desdits composants, doit pouvoir être ouvert afin d'autoriser un accès à ces composants.

Notamment, dans le cas où ledit appareil électronique est prévu pour être alimenté par l'intermédiaire d'un moyen de stockage d'électricité, comme par exemple une batterie ou des piles, reçu dans ledit boîtier, il est nécessaire de pouvoir accéder fréquemment à celui-ci, car son remplacement, en cas de décharge, doit être effectué régulièrement.

On connaît des serrures électroniques, dont l'ouverture et la fermeture est effectuée au moyen d'un actionneur électrique et pilotée par un système de commande sécurisé dont l'alimentation en électricité est généralement effectuée par l'intermédiaire d'un moyen de stockage d'électricité, car il s'avère souvent trop complexe et trop couteux de prévoir une alimentation par le secteur, et car la fréquence d'utilisation de telles serrures permet une faible consommation d'électricité. Le remplacement du moyen de stockage d'électricité peut donc intervenir après un intervalle de temps important, mais néanmoins de façon régulière au cours de la durée de vie de ladite serrure électronique.

Egalement, en cas de défaillance de la serrure, du moyen de stockage d'électricité ou de tout autre composant, il s'avère nécessaire de pouvoir bénéficier d'un accès à ces composants.

De façon bien connue, un boîtier d'appareil électronique comporte généralement un capot, notamment en matériau plastique, monté amovible sur ledit boîtier électronique afin de pouvoir accéder au moyen de stockage d'électricité, et éventuellement aux autres composants de l'appareil électronique. Afin d'assurer l'immobilisation du capot par rapport au boîtier électronique, il est généralement prévu des éléments d'arrêt en position disposés sur le capot et/ou sur le boîtier, par exemple sous forme d'une languette reçue dans un logement de forme complémentaire, et venant se déformer pour permettre la mise en position ou le retrait du capot sur ledit boîtier. Ces éléments d'arrêt sont généralement fragiles, et le fait de les déformer de façon répétée au cours du temps pour assurer la mise en position ou le retrait du capot sur le boîtier les détériore rapidement, encore plus lorsqu'ils sont réalisés en matériau plastique.

Afin d'assurer une fixation optimale du capot sur le boîtier, il peut être prévu d'employer des éléments d'arrêt démontables, comme par exemple une vis reçue dans un filetage. Néanmoins, même si de tels éléments d'arrêt risquent moins de se détériorer rapidement, le fait de devoir monter et démonter ces éléments augmente considérablement le temps nécessaire au retrait ou à la mise en position du capot sur le boîtier, et augmente le risque d'égarer ces éléments d'arrêt au cours de la mise en position ou du retrait du capot sur le boîtier.

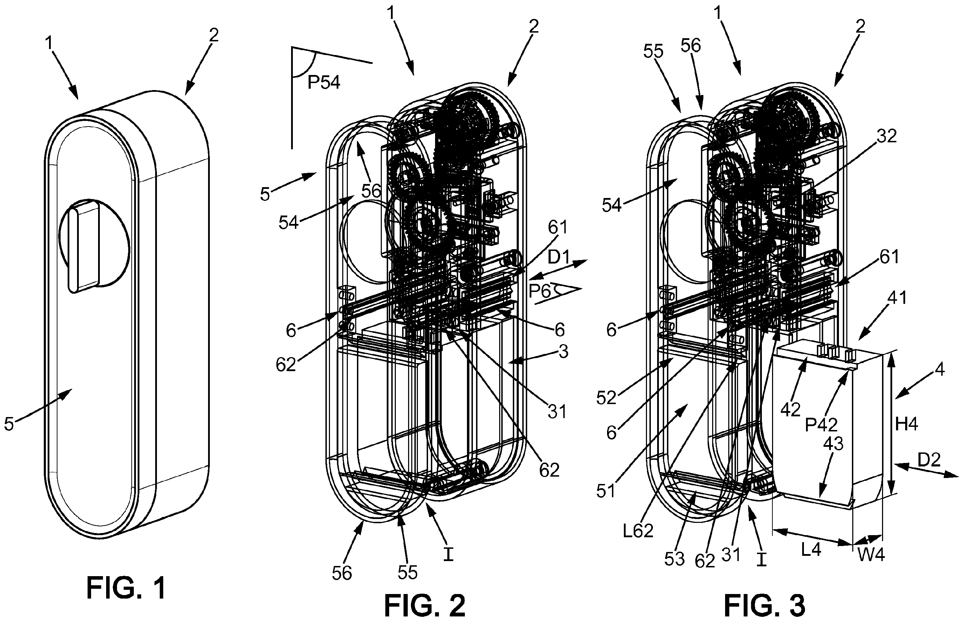

Dans le domaine des serrures électroniques, on connaît par exemple du document CN 203499348 une coque de verrou pour porte logeant un verrou pour porte avec ses différents éléments. Comme visible sur les figures 1 et 2 de ce document, le verrou est prévu pour être alimenté par une batterie reçue dans un logement de batterie (repéré 12 sur les figures 1 et 2) de la coque. La batterie est reçue dans un tiroir (repéré 11), amovible par rapport à ladite coque de verrou et prévu pour coulisser sur ladite coque de verrou de sorte à assurer la mise en position et le retrait de la batterie dudit logement de batterie, afin de pouvoir assurer sa maintenance.

Un tel dispositif présente l'inconvénient que, la batterie étant insérée (ou extraite) dans le tiroir en venant coulisser selon une direction parallèle à la direction de coulissement du tiroir sur la coque pour sa mise place ou son retrait, il est indispensable de désolidariser complétement le tiroir de la coque pour effectuer le remplacement de la batterie, ce qui augmente le temps nécessaire au retrait de la batterie, mais également le risque d'égarer ledit tiroir lors d'une opération de remplacement de la batterie.

Un premier objectif de la présente invention est donc de proposer un boîtier d'appareil électronique alimenté par un moyen de stockage d'électricité, comprenant un capot amovible, permettant d'introduire et de retirer rapidement et simplement ledit moyen de stockage d'électricité.

Un deuxième objectif de la présente invention est de proposer un tel boîtier électronique dont le capot ne risque pas d'être égaré au cours d'une opération de maintenance du moyen de stockage d'électricité.

Un troisième objectif de la présente invention est de proposer un tel boîtier électronique dont la mise en place et le retrait répété du capot n'endommage pas la fixation du capot au boîtier.

Ainsi l'invention concerne un boîtier d'appareil électronique, configuré pour recevoir des composants d'un appareil électronique, comprenant :
- une portion de réception des composants de l'appareil électronique avec une portion de réception d'un moyen de stockage d'électricité, configuré pour recevoir un moyen de stockage d'électricité amovible, ladite portion de réception d'un moyen de stockage d'électricité comprenant des moyens de connexion électrique configurés pour être en contact avec les pôles du moyen de stockage d'électricité et pour recevoir de l'électricité du moyen de stockage d'électricité,
- un capot amovible, destiné à recouvrir la portion de réception d'un moyen de stockage d'électricité, apte à passer d'une position de fermeture dans laquelle le capot recouvre la portion de réception d'un moyen de stockage d'électricité de sorte à isoler le moyen de stockage d'électricité de l'extérieur du boîtier, à une position d'ouverture dans laquelle le capot amovible est positionné à distance du boîtier, de sorte à permettre le retrait du moyen de stockage d'électricité, le capot amovible comportant des moyens de réception du moyen de stockage d'électricité, comprenant un système de guidage en coulissement entre le capot amovible et le moyen de stockage d'électricité,
- des moyens de guidage en translation selon une direction D1 du capot amovible par rapport à la portion de réception d'un moyen de stockage d'électricité, assurant le guidage en translation du capot amovible par rapport à la portion de réception d'un moyen de stockage d'électricité selon ladite direction D1, entre la position de fermeture et la position d'ouverture, présentant une fin de course définissant la position d'ouverture dans laquelle le capot amovible est écarté de la portion de réception d'un moyen de stockage d'électricité en laissant un inter-espace entre le capot amovible et la portion de réception d'un moyen de stockage d'électricité autorisant l'insertion ou l'extraction du moyen de stockage d'électricité.

Selon l'invention, ledit boitier d'appareil électronique est configuré pour permettre l'extraction et/ou l'insertion du moyen de stockage de l'électricité selon la séquence suivante :
- une première étape dans laquelle on écarte le capot amovible de la portion de réception du moyen de stockage d'électricité, depuis la position de fermeture vers la position d'ouverture, et
- dans ladite position d'ouverture, lesdits moyens de guidage en translation se trouvant en fin de course, une deuxième étape de coulissement dans laquelle on extrait ou on insère le moyen de stockage d'électricité par coulissement le long du système de guidage, le moyen de stockage de l'électricité traversant ledit inter-espace.

Selon d'autres caractéristiques de l'invention, prises seules ou en combinaison :
- les moyens de guidage en translation du capot amovible par rapport à la portion de réception d'un moyen de stockage d'électricité comprennent au moins une glissière comprenant un premier rail de guidage, relié à la portion de réception des composants, et un deuxième rail de guidage, relié au capot amovible, le premier rail de guidage étant monté coulissant par rapport au deuxième rail de guidage,
- la fin de course du capot amovible par rapport à la portion de réception du moyens de stockage d'électricité est définie par une butée de fin de course, réalisée sous la forme d'un plot, ménagé sur le premier ou le deuxième rail de guidage de la glissière, ledit plot venant buter contre une première extrémité d'une rainure longitudinale s'étendant selon ladite direction, solidaire de l'autre rail de guidage ne comportant pas le plot, ladite rainure longitudinale étant ménagée sur une pièce d'arrêt solidaire de l'autre rail de guidage,
- le plot vient buter contre la deuxième extrémité de la rainure longitudinale lorsque le capot amovible est dans ladite position de fermeture, et dans lequel au moins une des deux extrémités de la rainure longitudinale est configurée de sorte à pouvoir se déformer élastiquement afin de venir enserrer le plot lorsque le capot amovible se trouve en position d'ouverture, respectivement en position de fermeture, et de telle sorte que la course du capot amovible par rapport à la portion de réception du moyen de stockage d'électricité présente au moins un point dur à proximité de la position d'ouverture, respectivement de fermeture,

- le système de guidage en coulissement entre le capot amovible et le moyen de stockage d'électricité est configuré de sorte à permettre un coulissement du moyen de stockage d'électricité par rapport au capot amovible selon une direction D2, la direction D2 étant orthogonale à la direction D1 des moyens de guidage en translation du capot amovible par rapport à la portion de réception des composants,
- la portion de réception du moyen de stockage d'électricité comporte lesdits moyens de connexion électrique configurés pour être en contact avec les pôles du moyen de stockage d'électricité et pour recevoir de l'électricité du moyen de stockage d'électricité de sorte que le passage du capot amovible de la position de fermeture vers la position d'ouverture assure automatiquement la perte du contact électrique entre les pôles du moyen de stockage de l'électricité et lesdits moyens de connexion électrique, le passage de la position d'ouverture vers la position de fermeture assurant automatiquement la mise en contact électrique entre les pôles du moyens de stockage d'électricité et lesdits moyens de connexion électrique,
- le moyen de stockage d'électricité comporte une batterie ou une ou plusieurs piles,
- les moyens de réception du moyen de stockage d'électricité du capot amovible comprennent un système de détrompeur, de sorte à s'assurer que le moyen de stockage d'électricité est positionné de façon conforme sur le capot amovible,
- ledit système de guidage en coulissement entre le capot amovible et le moyen de stockage de l'électricité comporte :
   - un rail supérieur et un rail inférieur ménagés sur la paroi intérieure du capot amovible,
   - une nervure supérieure, ménagée sur le moyen de stockage d'électricité, destinée à coulisser dans ledit rail supérieur et une nervure inférieure, ménagée sur le moyen de stockage d'électricité, destinée à coulisser dans ledit rail inférieur, une patte de détrompeur étant ménagée sur la nervure supérieure ou sur la nervure inférieure destinée à être reçue dans un logement détrompeur de forme correspondante, ménagé au niveau d'une extrémité longitudinale du rail recevant ladite nervure, ladite patte de détrompeur étant configurée de sorte à empêcher l'insertion, au moins partiellement de la nervure supérieure dans le rail inférieur et/ou de la nervure inférieure dans le rail supérieur, de sorte à constituer ledit système de détrompeur,
- le capot amovible comporte une paroi d'obturation, sensiblement plane, s'étendant dans un plan P54, configurée pour recouvrir la portion de réception du moyen de stockage d'électricité,
- ladite direction D1 s'étend perpendiculairement au plan P54 dans un plan P6, orthogonal au plan P54,
- ladite direction D2 s'étend parallèlement au plan P54 et parallèlement au plan P6,
- la portion de réception du moyen de stockage d'électricité comprend une paroi latérale et le capot amovible comprend un pourtour latéral, ladite paroi latérale et ledit pourtour latéral étant de forme complémentaire et étant dimensionnés de sorte à ce que ladite paroi latérale et ledit pourtour latéral soient en contact lorsque le capot amovible se trouve en position de fermeture,
- une bande en élastomère est disposée sur le pourtour latéral du capot amovible, de sorte à assurer l'immobilisation du capot amovible par rapport à la portion de réception du moyen de stockage d'électricité par frottement, lorsque le capot amovible est en position de fermeture.

L'invention concerne également une serrure électronique comprenant un boîtier d'appareil électronique selon l'invention.

L'invention sera mieux comprise à la lecture de la description suivante accompagnée des dessins parmi lesquels :
- la figure 1 est une vue en perspective d'un boîtier d'appareil électronique selon un mode de réalisation conforme à l'invention, dont le capot est en position de fermeture,
- la figure 2 est une vue en perspective du boîtier d'appareil électronique de la figure 1, dont le capot est en position d'ouverture, et le moyen de stockage d'électricité est inséré dans le capot amovible,
- la figure 3 est une vue en perspective du boîtier d'appareil électronique de la figure 1 et de la figure 2, dont le capot est en position d'ouverture, et le moyen de stockage d'électricité est retiré du capot amovible,
- la figure 4 est une vue de détail en éclaté du système de guidage en coulissement entre le capot amovible et la portion de réception des composants de l'appareil électronique.

L'invention concerne un boîtier d'appareil électronique 1, configuré pour recevoir des composants d'un appareil électronique, comprenant :
- une portion de réception des composants de l'appareil électronique 2 avec une portion de réception d'un moyen de stockage d'électricité 3, configuré pour recevoir un moyen de stockage d'électricité 4 amovible, ladite portion de réception d'un moyen de stockage d'électricité 3 comprenant des moyens 31 de connexion électrique configurés pour être en contact avec les pôles 41 du moyen de stockage d'électricité 4 et pour recevoir de l'électricité du moyen de stockage d'électricité 4,
- un capot amovible 5, destiné à recouvrir la portion de réception d'un moyen de stockage d'électricité 3, apte à passer d'une position de fermeture dans laquelle le capot recouvre la portion de réception d'un moyen de stockage d'électricité 3 de sorte à isoler le moyen de stockage d'électricité 4 de l'extérieur du boîtier 1, à une position d'ouverture dans laquelle le capot amovible 5 est positionné à distance du boîtier 1, de sorte à permettre le retrait du moyen de stockage d'électricité 4, le capot amovible 5 comportant des moyens de réception du moyen de stockage d'électricité 51, comprenant un système de guidage en coulissement 52, 53 entre le capot amovible 5 et le moyen de stockage d'électricité 4,
- des moyens de guidage en translation 6 selon une direction D1 du capot amovible 5 par rapport à la portion de réception d'un moyen de stockage d'électricité 3, assurant le guidage en translation du capot amovible 5 par rapport à la portion de réception d'un moyen de stockage d'électricité 3 selon ladite direction D1, entre la position de fermeture et la position d'ouverture, présentant une fin de course pour le capot amovible 5 par rapport à la portion de réception d'un moyen de stockage d'électricité 3, définissant la position d'ouverture dans laquelle le capot amovible 5 est écarté de la portion de réception d'un moyen de stockage d'électricité 3 en laissant un inter-espace I entre le capot amovible 5 et la portion de réception d'un moyen de stockage d'électricité 3 autorisant l'insertion ou l'extraction du moyen de stockage d'électricité 4.

Selon l'invention, ledit boitier d'appareil électronique 1 est configuré pour permettre l'extraction et/ou l'insertion du moyen de stockage de l'électricité 4 selon la séquence suivante :
- une première étape dans laquelle on écarte le capot amovible 5 de la portion de réception du moyen de stockage d'électricité 3, depuis la position de fermeture vers la position d'ouverture, et
- dans ladite position d'ouverture, lesdits moyens de guidage en translation 6 se trouvant en fin de course, une deuxième étape de coulissement dans laquelle on extrait ou on insère le moyen de stockage d'électricité par coulissement le long du système de guidage en translation 6, le moyen de stockage de l'électricité 4 traversant ledit inter-espace I.

Ainsi, dans le boîtier d'appareil électronique 1 conforme à l'invention, le capot amovible 5 est relié en permanence à la portion de réception des composants de l'appareil électronique 2, quelle que soit la position du capot amovible 5 par rapport à la portion de réception d'un moyen de stockage d'électricité 3, et par l'intermédiaire des moyens de guidage en translation 6 qui présentent une fonction de fin de course.

De ce fait, il n'y a pas de risque d'égarer le capot amovible 5 lors d'une opération de maintenance du moyen de stockage d'électricité 4, notamment lors de son remplacement par un nouveau de stockage d'électricité 4 après son déchargement complet.

La séquence d'extraction et/ou d'insertion du moyen de stockage d'électricité 4 dans le boîtier d'appareil électronique 1 est simple et particulièrement rapide à mettre en oeuvre, en ce qu'elle nécessite un nombre minimal de mouvements pour un opérateur.

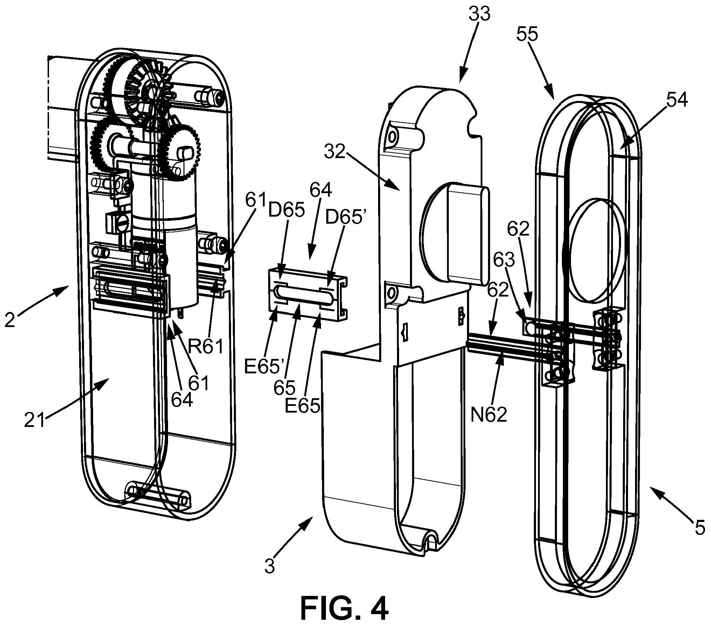

Comme visible plus particulièrement sur l'exemple de réalisation la figure 4, la portion de réception du moyen de stockage d'électricité 3 peut toutefois être prévue amovible par rapport à la portion de réception des composants de l'appareil électronique 2, avec en particulier la possibilité de démonter des moyens de guidage en translation 6, notamment en cas d'une maintenance plus poussée qu'un simple changement du moyen de stockage d'électricité 4.

Dans ce cas, des moyens de fixation (non représentés), comme par exemple des vis de fixation, peuvent être prévus de sorte à assurer la solidarisation de la portion de réception du moyen de stockage d'électricité 3 à la portion de réception des composants de l'appareil électronique 2.

Par ailleurs, ladite portion de réception du moyen de stockage d'électricité 3 peut être prolongée par une paroi d'obturation 33, sensiblement plane, et configurée de sorte à obturer, au moins partiellement, la portion de réception des composants de l'appareil électronique 2, lorsque la portion de réception du moyen de stockage d'électricité 3 est mise en position dans la portion de réception des composants de l'appareil électronique 2.

Notamment, ladite portion de réception du moyen de stockage d'électricité 3, et notamment la paroi d'obturation 33, peut être configurée de sorte à ce que seule la batterie de l'appareil électronique 1 soit accessible lorsque le capot amovible 5 se trouve dans sa position d'ouverture, la portion de réception du moyen de stockage d'électricité 3 empêchant l'accès aux autres composants de l'appareil électronique 1, et cet accès n'étant rendu possible qu'après désolidarisation de la portion de réception du moyen de stockage d'électricité 3 de la portion de réception des composants de l'appareil électronique 2.

Selon un mode de réalisation de l'invention, les moyens de guidage 6 du capot amovible 5 par rapport à la portion de réception d'un moyen de stockage d'électricité 3 comprennent au moins une glissière comprenant un premier rail de guidage 61, relié à la portion de réception des composants 2, et un deuxième rail de guidage 62, relié au capot amovible 5, le premier profilé 61 étant monté coulissant par rapport au deuxième profilé 62.

Avantageusement, et comme visible plus particulièrement sur l'exemple de réalisation de la figure 4, le premier rail de guidage 61 peut être ménagé d'un seul tenant avec la portion de réception des composants 2. Alternativement, ledit rail de guidage 61 peut être réalisé sous la forme d'une pièce amovible, fixée sur ladite portion de réception des composants.

De la même manière, le deuxième rail de guidage 62 peut être ménagé d'un seul tenant sur le capot amovible 5 ou être réalisé sous la forme d'une pièce amovible.

Comme visible sur les exemples de réalisation des figures 2 et 3, le premier rail de guidage 61 et le deuxième rail de guidage 62 s'étendent selon la dite direction D1, et peuvent avoir des sections de forme complémentaire.

Comme visible sur l'exemple de réalisation de la figure 4, le premier rail de guidage 61 peut être prévu comme un rail creux, avec par exemple une rainure R61 de section transversale sensiblement en forme de « V », dont la pointe est orientée vers l'extérieur de la portion de réception des composants de l'appareil électronique 2, tandis que le deuxième rail de guidage 62 peut être prévu comme un rail plein, avec par exemple une nervure N62 de section transversale sensiblement en forme de « V », dont la pointe est orientée vers l'extérieur de la portion de réception des composants de l'appareil électronique 2, ladite nervure N62 étant reçue à l'intérieur de ladite rainure R62.

Des moyens de réduction du frottement, comme par exemple des billes, peuvent être prévus entre ledit premier rail de guidage 61 et le deuxième rail de guidage 62, de sorte à assurer un coulissement avec un frottement réduit entre le premier rail de guidage 61 et le deuxième rail de guidage 62.

Avantageusement, comme visible sur les exemples de réalisation des figures 2 et 3, il peut être prévu deux glissières identiques disposées parallèlement selon ladite direction D1, afin d'assurer un guidage rigide et robuste entre le capot amovible 5 et la portion de réception d'un moyen de stockage d'électricité 3.

Le premier rail de guidage 61 de la glissière peut être disposé au niveau d'une paroi, et notamment une paroi intérieure, de la portion de réception des composants de l'appareil électronique 2, avantageusement dans une partie de la portion de réception des composants de l'appareil électronique 2 distincte de ladite portion de réception d'un moyen de stockage d'électricité 3, afin de ne pas venir interférer avec le moyen de stockage d'électricité 4, lorsque le capot amovible 5 est en position de fermeture, le moyen de stockage d'électricité 4 étant positionné dans la portion de réception d'un moyen de stockage d'électricité 3.

Selon un mode de réalisation, la fin de course du capot amovible 5 par rapport à la portion de réception du moyen de stockage d'électricité 3 est définie par une butée de fin de course 63, réalisée sous la forme d'un plot 63, ménagé sur l'un des premier ou deuxième rail de guidage 61, 62 de la glissière, ledit plot 63 venant buter contre une première extrémité E65 d'une rainure longitudinale 65 s'étendant selon ladite direction D1, solidaire de l'autre rail de guidage 61 ne comportant pas le plot 63, ladite rainure longitudinale 65 étant ménagée sur une pièce d'arrêt 64 reçue sur ledit rail de guidage 61.

Afin de minimiser l'encombrement du boitier 1, ledit plot 63 peut être disposé en saillie vers l'intérieur du boîtier 1.

« Vers l'intérieur du boîtier 1 » signifie que ledit plot s'étend en saillie à l'opposé de la direction vers laquelle la pointe du « V » de la rainure du premier rail de guidage 61 ou de la nervure du deuxième rail de guidage 62, pointe, comme visible plus particulièrement sur l'exemple de réalisation de la figure 4.

Avantageusement, l'autre extrémité E65' de la rainure longitudinale 65 peut être également configurée de sorte à recevoir en butée ledit plot 63, afin de créer une autre position de fin de course du capot amovible 5 par rapport à la portion de réception du moyen de stockage d'électricité 3, lorsque le capot amovible 5 se trouve dans ladite position de fermeture.

Ledit plot 63 peut être prévue amovible de sorte à pouvoir modifier la position de fin de course des moyens de guidage 6.

Ladite pièce d'arrêt 64 peut être amovible pour permettre la désolidarisation complète entre le capot amovible 5 et la portion de réception des composants de l'appareil électronique 2. La pièce d'arrêt 64 est ainsi par exemple montée coulissante sur ledit rail de guidage 61, selon la direction D1 d'extension dudit rail de guidage 61, afin de faciliter son montage sur ledit rail de guidage 61. Des moyens de fixation supplémentaires (non représentés) peuvent être prévus afin d'assurer l'immobilisation de ladite pièce d'arrêt 64 sur ledit rail de guidage 61.

Alternativement, l'arrêt en translation de ladite pièce d'arrêt 64 peut être obtenu en prévoyant une pièce d'arrêt 64 avec une longueur selon la direction D1, telle que ladite pièce d'arrêt 64 vient buter contre une paroi de fond 21 de la portion de réception des composants de l'appareil électronique 2, afin d'assurer son arrêt en translation dans un premier sens, et contre la paroi d'obturation 33 de la portion de réception du moyen de stockage d'électricité 3, lorsque la portion de réception du moyen de stockage d'électricité 3 est fixée dans la portion de réception des composants de l'appareil électronique, afin d'assurer son arrêt en translation dans un deuxième sens.

Selon un mode de réalisation, le plot 63 vient buter contre la deuxième extrémité E65' de la rainure longitudinale 65 lorsque le capot amovible 5 est dans ladite position de fermeture, et dans lequel au moins une des deux extrémités E65, E65' de la rainure longitudinale 65 est configurée de sorte à pouvoir se déformer élastiquement afin de venir enserrer le plot 63 lorsque le capot amovible 5 se trouve en position d'ouverture, respectivement en position de fermeture, et de telle sorte que la course du capot amovible 5 par rapport à la portion de réception du moyen de stockage d'électricité 3 présente au moins un point dur à proximité de la position d'ouverture, respectivement de fermeture.

Grâce à cette disposition avantageuse de l'invention, ladite rainure longitudinale 65 permet d'assurer l'immobilisation du capot amovible 5 par rapport à la portion de réception du moyen de stockage d'électricité 3, dans la position d'ouverture, afin de faciliter le retrait et l'insertion du moyen de stockage d'électricité 4 dans ladite portion de réception du moyen de stockage d'électricité 3, ou encore dans la position de fermeture, afin de maintenir le capot amovible 5 en position de fermeture pour protéger le moyen de stockage d'électricité 4 de l'extérieur.

Comme visible sur l'exemple de réalisation de la figure 4, une découpe D65, D65' dans la pièce d'arrêt 64 au niveau des extrémités E65, E65' de la rainure longitudinale 65, combiné à un rétrécissement de la section de ladite rainure longitudinale 65 au niveau desdites extrémités E65, E65' peut être prévue afin de permettre la déformation élastique desdites extrémités E65, E65'.

Selon un mode de réalisation, le système de guidage en coulissement 51 entre le capot amovible 5 et le moyen de stockage d'électricité 4 est configuré de sorte de sorte à permettre un coulissement du moyen de stockage d'électricité 4 par rapport au capot amovible 5 selon une direction D2, la direction D2 étant orthogonale à la direction D1 des moyens de guidage en translation 6 du capot amovible 5 par rapport à la portion de réception des composants 2.

Grâce à cette disposition avantageuse de l'invention, et contrairement aux dispositifs de l'état de la technique, et notamment celui décrit dans le document CN 203499348, il n'est pas nécessaire de faire parcourir une course importante au capot amovible afin de pouvoir insérer ou extraire le moyen de stockage d'électricité 4 de la portion de réception d'un moyen de stockage d'électricité 3.

En effet, comme visible sur l'exemple de réalisation de la figure 3, dès lors que l'inter-espace I entre le capot amovible 5 et la portion de réception d'un moyen de stockage d'électricité 3 est supérieur à la largeur W4 du moyen de stockage d'électricité 4, il est possible pour un opérateur d'insérer ou d'extraire ledit moyen de stockage d'électricité 4 du capot amovible 5, en le faisant coulisser par l'intermédiaire du système de guidage en coulissement 51 du capot amovible 5.

A cet effet, et de façon avantageuse, il peut être prévu que le moyen de stockage d'électricité 4 soit positionné dans la portion de réception d'un moyen de stockage d'électricité 3 avec sa largeur W4, par ailleurs inférieure à sa hauteur H4 et à sa longueur L4, orientée selon ladite direction D1 de coulissement du capot amovible 5 par rapport à la portion de réception d'un moyen de stockage d'électricité 3.

Comme visible sur l'exemple de réalisation de la figure 3, le moyen de stockage d'électricité 4 est prévu pour coulisser par l'intermédiaire du système de guidage en coulissement 51 en étant orienté de sorte que ladite direction D2 corresponde à sa longueur L4.

Selon un mode de réalisation, la portion de réception du moyen de stockage d'électricité 3 comporte lesdits moyens de connexion électrique 31 configurés pour être en contact avec les pôles 41 du moyen de stockage d'électricité et pour recevoir de l'électricité du moyen de stockage d'électricité 4 de sorte que le passage du capot amovible 5 de la position de fermeture vers la position d'ouverture assure automatiquement la perte du contact électrique entre les pôles 41 du moyen de stockage de l'électricité 4 et lesdits moyens de connexion électrique 31, le passage de la position d'ouverture vers la position de fermeture assurant automatiquement la mise en contact électrique entre les pôles 41 du moyen de stockage d'électricité 4 et lesdits moyens de connexion électrique 31.

Grâce à cette disposition avantageuse de l'invention, un opérateur, lorsqu'il effectue le retrait ou la mise en place du moyen de stockage d'électricité 4 du capot amovible 5, n'a pas à se préoccuper de la connexion ou de la déconnexion des pôles auxdits moyens de connexion électrique 31.

A cet effet, le système de guidage en coulissement 51 est configuré de sorte à présenter une fin de course, par exemple par l'intermédiaire d'une butée de fin de course P42, afin que le coulissement du moyen de stockage d'électricité 4 dans les moyens de réception du moyen de stockage d'électricité 51 se fasse jusqu'à ce que le moyen de stockage d'électricité se trouve dans la position adéquate permettant aux pôles 41 du moyen de stockage d'électricité 4 de se trouver en contact avec les moyens de connexion électrique 31, une fois le capot amovible 5 en position de fermeture.

Selon un mode de réalisation, le moyen de stockage d'électricité 4 comporte une batterie ou une ou plusieurs piles.

Dans le cas où le moyen de stockage d'électricité 4 comporte une ou plusieurs piles, les moyens de réception du moyen de stockage d'électricité 51 peuvent comporter un réceptacle amovible par rapport au capot amovible 5, conformé de sorte à recevoir une ou plusieurs piles et à coopérer avec le système de guidage en coulissement 51.

Selon un mode de réalisation, ledit système de guidage en coulissement entre le capot amovible 5 et le moyen de stockage de l'électricité 4 comporte :
- un rail supérieur 52 et un rail inférieur 51 ménagés sur la paroi intérieure du capot amovible 5, la paroi intérieure du capot amovible 5 étant la paroi du capot amovible 5 se trouvant en vis-à-vis de la portion de réception d'un moyen de stockage d'électricité 3,
- une nervure supérieure 42, ménagée sur le moyen de stockage d'électricité 4, destinée à coulisser dans ledit rail supérieur 52 et une nervure inférieure 43, ménagée sur le moyen de stockage d'électricité 4, destinée à coulisser dans ledit rail inférieur 53.
Comme visible sur l'exemple de réalisation de la figure 3, la nervure supérieure 42 et la nervure inférieure 43 peuvent être directement ménagées sur le moyen de stockage d'électricité 4.

Le rail supérieur 52 et/ou le rail inférieur 53 peuvent également être ménagés d'un seul tenant sur la paroi intérieure du capot amovible 5, notamment si celui-ci est obtenu par moulage.

Afin d'assurer un guidage optimal en coulissement du moyen de stockage d'électricité par rapport au capot amovible 5, la section du rail supérieur 52/du rail inférieur 53/de la nervure supérieure 42/de la nervure inférieure 43 peut être une section en queue d'aronde.

Comme visible sur les exemples de réalisation des figures 1 et 2, le rail supérieur 52 peut être disposé au-dessus du rail inférieur 53.

Selon un mode de réalisation, les moyens de réception 51 du moyen de stockage d'électricité 4 du capot amovible 5 comprennent un système de détrompeur, de sorte à s'assurer que le moyen de stockage d'électricité 4 est positionné de façon conforme sur le capot amovible.

On entend par « conforme » que le moyen de stockage d'électricité 4 est positionné de telle sorte que les pôles 41 du moyen de stockage d'électricité 4 se retrouveront bien en contact avec les moyens de connexion électrique 31 de la portion de réception d'un moyen de stockage d'électricité 3, lorsque le capot mobile se trouve en position de fermeture, mais également que le moyen de stockage d'électricité 4 n'empêche pas la mise en place du capot amovible 5 dans ladite position de fermeture.

Grâce à cette disposition avantageuse de l'invention, un opérateur n'a pas à se soucier du positionnement du moyen de stockage d'électricité 4 sur le capot amovible 5, car seule l'introduction dans la position conforme du moyen de stockage d'électricité 4 sur le capot amovible 5 n'est possible.

Les opérations de maintenance de l'appareil électronique, et notamment de changement du moyen de stockage d'électricité 4 s'en trouvent simplifiées et accélérées.

Selon un mode de réalisation, une patte de détrompeur P42 est ménagée sur la nervure supérieure 42 ou sur la nervure inférieure 43, destinée à être reçue dans un logement détrompeur L52 de forme correspondante, ménagé au niveau d'une extrémité longitudinale du rail 52 recevant ladite nervure 42, ladite patte de détrompeur P42 étant configurée de sorte à empêcher l'insertion, au moins partiellement de la nervure supérieure 42 dans le rail inférieur 53 et/ou de la nervure inférieure 43 dans le rail supérieur 52, de sorte à constituer ledit système de détrompeur.

Comme visible sur l'exemple de réalisation de la figure 3, ladite patte de détrompeur P42 peut être de section sensiblement carrée et s'étendre selon une direction sensiblement perpendiculaire à la direction D2, d'insertion du moyen de stockage d'électricité 4 dans ladite portion de réception d'un moyen de stockage d'électricité 3, selon la hauteur H4 dudit moyen de stockage d'électricité 4.

Alternativement ou en complément, la section transversale du rail supérieur 52/nervure supérieure 42 et la section transversale du rail inférieure 53/nervure inférieure 43 sont différentes de sorte à constituer ledit système de détrompeur.

Ainsi, lesdites sections transversales peuvent être de forme identique, par exemple en queue d'aronde, mais de dimensions différentes, ou encore lesdites sections transversales peuvent être de formes différentes.

Selon un mode de réalisation, le capot amovible 5 comporte une paroi d'obturation 54, sensiblement plane, s'étendant dans un plan P54, configurée pour recouvrir la portion de réception du moyen de stockage d'électricité 3.

Comme visible sur l'exemple de réalisation de la figure 4, la paroi d'obturation 54 peut être prévue parallèle à la paroi d'obturation 33 de la portion de réception du moyen de stockage d'électricité 3.

Les autres composants de l'appareil électronique peuvent également être reçus dans ladite portion de réception des composants de l'appareil électronique 2, en communication ou non avec ladite portion de réception du moyen de stockage d'électricité 3.

Le capot amovible 5, et notamment la paroi d'obturation 54 peut ainsi également être configurée pour recouvrir l'ensemble de ladite portion de réception des composants de l'appareil électronique 2, comme visible sur les exemples de réalisation des figures 1 à 3, afin de permettre un accès aisé à ces composants, pour les opérations de maintenance.

Selon un mode de réalisation, ladite direction D1 s'étend perpendiculairement au plan P54 dans un plan P6, orthogonal au plan P54.

Selon un mode de réalisation, ladite direction D2 s'étend parallèlement au plan P54 et parallèlement au plan P6.

Ainsi, comme visible sur l'exemple de réalisation de la figure 3, le moyen de stockage d'électricité 4 peut être introduit latéralement au capot amovible, et non selon une direction passant par le plan P54 de la paroi d'obturation 54 et parallèlement au plan P6, comme par exemple dans le dispositif décrit dans le document CN 203499348.

Cette disposition de l'invention est particulièrement avantageuse dans le cas où l'appareil électronique est une serrure électronique, comme représenté par exemple sur les figures 1 à 3.

Une telle serrure électronique est prévue pour être fixée sur une porte de sorte que le plan P54 de la paroi d'obturation 54 soit sensiblement parallèle au plan de la porte sur laquelle ladite serrure électronique est montée.

Afin de faciliter l'accès à la serrure, la portion de réception d'un moyen de stockage d'électricité 3 est prévue pour être positionnée en partie inférieure de la portion de réception des composants de l'appareil électronique 2, lorsque ladite serrure électronique est installée dans sa position d'utilisation sur une porte.

Afin de faciliter l'insertion et l'extraction du moyen de stockage d'électricité 4 sur le capot amovible 5, et qu'un opérateur puisse bénéficier de suffisamment de visibilité pour réaliser une telle opération, il est particulièrement avantageux de pouvoir insérer ou extraire le moyen de stockage d'électricité 4 latéralement, et non par-dessus ou par-dessous comme pour les dispositifs de l'état de la technique, comme par exemple celui décrit dans le document CN 203499348, pour lesquels une telle visibilité est réduite.

Par ailleurs, comme expliqué précédemment, cette disposition avantageuse participe à la diminution de l'inter-espace I nécessaire à l'insertion ou à l'extraction du moyen de stockage d'électricité 4, et notamment quand ladite direction D1 est orientée selon la largeur W4 du moyen de stockage d'électricité 4.

Selon un mode de réalisation, la portion de réception du moyen de stockage d'électricité 3 comprend une paroi latérale 32 et le capot amovible 5 comprend un pourtour latéral 55, ladite paroi latérale 32 et ledit pourtour latéral 55 étant de forme complémentaire et étant dimensionnés de sorte à ce que ladite paroi latérale 32 et ledit pourtour latéral 55 soient en contact lorsque le capot amovible 5 se trouve en position de fermeture.

Le pourtour latéral 55 du capot amovible 5 et la paroi latérale 32 de la portion de réception du moyen de stockage d'électricité 3 peuvent avoir une forme identique et des dimensions identiques, afin de permettre au pourtour latéral 55 du capot amovible 5 d'être reçu, au jeu d'emboîtement près, par la paroi latérale 32 de la portion de réception du moyen de stockage d'électricité 3.

Comme visible sur l'exemple de réalisation des figures 1 à 3, le pourtour latéral 55 du capot amovible 5 et la paroi latérale 32 de la portion de réception du moyen de stockage d'électricité 3 peuvent être dimensionnés de telle sorte que le pourtour latéral 55 vienne entourer la paroi latérale 32, lorsque le capot amovible 5 se trouve en position de fermeture.

Alternativement, le pourtour latéral 55 du capot amovible 5 et la paroi latérale 32 de la portion de réception du moyen de stockage d'électricité 3 peuvent être dimensionnés de telle sorte que la paroi latérale 32 vienne entourer le pourtour latéral 55, lorsque le capot amovible 5 se trouve en position de fermeture.

Le pourtour latéral 55 du capot amovible 5 peut être prévu, au moins en partie, saillant depuis la paroi d'obturation 54, selon une direction sensiblement perpendiculaire au plan P54 de ladite paroi d'obturation 54.

Le pourtour latéral 55 peut être prévu, au moins en partie, comme étant uniquement composé du contour de ladite paroi d'obturation 54, notamment afin de diminuer la quantité de matière nécessaire à sa réalisation.

Selon un mode de réalisation, une bande en élastomère 56 est disposée sur le pourtour latéral 55 du capot amovible 5, de sorte à assurer l'immobilisation du capot amovible 5 par rapport à la portion de réception du moyen de stockage d'électricité 3 par frottement, lorsque le capot amovible 5 est en position de fermeture.

Cette disposition avantageuse de l'invention permet d'assurer l'immobilisation du capot amovible 5 par rapport à la portion de réception du moyen de stockage d'électricité 3, éventuellement en complément avec la rainure longitudinale 65 avec son extrémité E65' déformable élastiquement, tel que décrit précédemment, de façon simple, et en limitant le nombre d'éléments nécessaires à la réalisation de cette fonction, et contrairement aux dispositifs de l'état de la technique prévoyant l'employant de moyen de fixation supplémentaires, comme par exemple des vis, lesquels complexifient et augmentent sensiblement le temps de passage du capot amovible 5 à sa position d'ouverture par rapport à la portion de réception du moyen de stockage d'électricité.

Une telle bande en élastomère 56, par exemple en éthylène-propylène-diène monomère (EPDM), permet également d'améliorer l'étanchéité de la portion de réception du moyen de stockage d'électricité 3 par rapport à l'extérieur, lorsque le capot amovible 5 se trouve en position de fermeture.

L'invention concerne également une serrure électronique comprenant un boîtier d'appareil électronique 1 selon l'un des modes de réalisation décrit précédemment.

Un tel boîtier d'appareil électronique 1 est particulièrement avantageux pour une serrure électronique, en ce qu'il peut être disposé de telle sorte que le plan P54 de la paroi d'obturation 54 du capot amovible 5 soit disposé parallèlement au plan de la porte sur laquelle ladite serrure électronique est fixée, l'ouverture ou la fermeture du capot amovible 5 se faisant ainsi selon une direction D1, horizontale et perpendiculaire au plan de ladite porte, et l'insertion du moyen de stockage d'électricité 4, se faisant selon une direction latérale et horizontale, parallèle au plan de ladite porte, ce qui permet de réaliser rapidement et simplement le retrait ou l'insertion dudit moyen de stockage d'électricité 4 dans la portion de réception du moyen de stockage d'électricité 3.

Une serrure électronique est une serrure dont la mise en rotation du pêne se fait par l'intermédiaire d'un moteur électrique, disposé par exemple également dans ledit boîtier d'appareil électronique 1, éventuellement dans la portion de réception du moyen de stockage d'électricité 3, ou dans une portion distincte, pouvant également être isolée de l'extérieur par le capot amovible 5, et notamment par la paroi d'obturation 54 du capot amovible 5, afin de permettre la maintenance dudit moteur électrique.

Une telle serrure électronique comprend également d'autres composants, et notamment des moyens de commande électronique afin de piloter son ouverture ou sa fermeture par l'intermédiaire dudit moteur électrique. Ces composants peuvent également être reçus dans ladite portion de réception des composants de l'appareil électronique 2, en communication ou non avec ladite portion de réception du moyen de stockage d'électricité 3.

Une telle serrure peut par exemple correspondre à la serrure décrite dans la demande de brevet déposée sous le numéro FR 1758530.

Naturellement, d'autres modes de réalisation auraient pu être envisagés par l'Homme du métier sans pour autant sortir du cadre de l'invention définie par les revendications ci-après.

### NOMENCLATURE

1. Boîtier d'appareil électronique
2. Portion de réception des composants de l'appareil électronique
3. Portion de réception du moyen de stockage d'électricité
31. Moyens de connexion électrique
32. Paroi latérale
33. Paroi d'obturation
4. Moyen de stockage d'électricité
L4. Longueur
W4. Largeur
H4. Hauteur
41. Pôles
42. Nervure supérieure
43. Nervure inférieure
5. Capot amovible
51. Moyens de réception
52. Rail supérieur
53. Rail inférieur
54. Paroi d'obturation
P54. Plan
55. Pourtour latéral
56. Bande élastomère
6. Moyens de guidage en translation
P6. Plan
61. Premier rail de guidage
R61. Rainure
62. Deuxième rail de guidage N62. Nervure
63. Butée de fin de course
64. Pièce d'arrêt
65. rainure longitudinale
E65, E65'. Extrémité
D65, D65'. Découpe
D1, D2. Direction
I. Inter-espace

## Revendications

1. Boîtier d'appareil électronique (1), configuré pour recevoir des composants d'un appareil électronique, comprenant :
- une portion de réception des composants de l'appareil électronique (2) avec une portion de réception d'un moyen de stockage d'électricité (3), configuré pour recevoir un moyen de stockage d'électricité (4) amovible, ladite portion de réception d'un moyen de stockage d'électricité (3) comprenant des moyens de connexion électrique (31) configurés pour être en contact avec les pôles (41) du moyen de stockage d'électricité (4) et pour recevoir de l'électricité du moyen de stockage d'électricité (4),
- un capot (5) amovible, destiné à recouvrir la portion de réception d'un moyen de stockage d'électricité (3), apte à passer d'une position de fermeture dans laquelle le capot (5) recouvre la portion de réception d'un moyen de stockage d'électricité (3) de sorte à isoler le moyen de stockage d'électricité (4) de l'extérieur du boîtier (1), à une position d'ouverture dans laquelle le capot amovible (5) est positionné à distance du boîtier (1), de sorte à permettre le retrait du moyen de stockage d'électricité (4), le capot amovible (5) comportant des moyens (51) de réception du moyen de stockage d'électricité (4), comprenant un système de guidage en coulissement (51) entre le capot amovible (5) et le moyen de stockage d'électricité (4),
- des moyens (6) de guidage en translation selon une direction (D1) du capot amovible (5) par rapport à la portion de réception d'un moyen de stockage d'électricité (3), assurant le guidage en translation du capot amovible (5) par rapport à la portion de réception d'un moyen de stockage d'électricité (3) selon ladite direction (D1), entre la position de fermeture et la position d'ouverture, présentant une fin de course définissant la position d'ouverture dans laquelle le capot amovible (5) est écarté de la portion de réception d'un moyen de stockage d'électricité (3) en laissant un inter-espace (I) entre le capot amovible (5) et la portion de réception d'un moyen de stockage d'électricité (3) autorisant l'insertion ou l'extraction du moyen de stockage d'électricité (4),
- ledit boitier d'appareil électronique (1) étant configuré pour permettre l'extraction et/ou l'insertion du moyen de stockage de l'électricité (4) selon la séquence suivante :
- une première étape dans laquelle on écarte le capot amovible (5) de la portion de réception du moyen de stockage d'électricité (3), depuis la position de fermeture vers la position d'ouverture, et
- dans ladite position d'ouverture, lesdits moyens (6) de guidage en translation se trouvant en fin de course, une deuxième étape de coulissement dans laquelle on extrait ou on insère le moyen de stockage d'électricité (4) par coulissement le long du système de guidage (51), le moyen de stockage de l'électricité (4) traversant ledit inter-espace (I).

2. Boîtier d'appareil électronique (1) selon la revendication 1, dans lequel les moyens (6) de guidage en translation du capot amovible (5) par rapport à la portion de réception d'un moyen de stockage d'électricité (3) comprennent au moins une glissière comprenant un premier rail de guidage (61), relié à la portion de réception des composants (2), et un deuxième rail de guidage (62), relié au capot amovible (5), le premier rail de guidage (61) étant monté coulissant par rapport au deuxième rail de guidage (62).

3. Boîtier d'appareil électronique (1) selon la revendication 2, dans lequel la fin de course du capot amovible (5) par rapport à la portion de réception du moyens de stockage d'électricité (3) est définie par une butée de fin de course (63), réalisée sous la forme d'un plot (63), ménagé sur l'un des premier ou deuxième rail de guidage (61, 62) de la glissière, ledit plot (63) venant buter contre une première extrémité (E65) d'une rainure longitudinale (65) s'étendant selon ladite direction (D1), solidaire de l'autre rail de guidage (61, 62) ne comportant le plot (63), ladite rainure longitudinale (65) étant ménagée sur une pièce d'arrêt (64) solidaire de l'autre rail de guidage (61).

4. Boîtier d'appareil électronique (1) selon la revendication 3, dans lequel le plot (63) vient buter contre la deuxième extrémité (E65') de la rainure longitudinale (65) lorsque le capot amovible (5) est dans ladite position de fermeture, et dans lequel au moins une des deux extrémités (E65, E65') de la rainure longitudinale (65) est configurée de sorte à pouvoir se déformer élastiquement afin de venir enserrer le plot (63) lorsque le capot amovible (5) se trouve en position d'ouverture, respectivement en position de fermeture, et de telle sorte que la course du capot amovible (5) par rapport à la portion de réception du moyen de stockage d'électricité (3) présente au moins un point dur à proximité de la position d'ouverture, respectivement de fermeture.

5. Boîtier d'appareil électronique (1) selon l'une des revendications 1 à 4 dans lequel le système de guidage en coulissement (51) entre le capot amovible (5) et le moyen de stockage d'électricité (4) est configuré de sorte de sorte à permettre un coulissement du moyen de stockage d'électricité (4) par rapport au capot amovible (5) selon une direction (D2), la direction (D2) étant orthogonale à la direction (D1) des moyens (6) de guidage en translation du capot amovible (5) par rapport à la portion de réception des composants (2).

6. Boîtier d'appareil électronique (1) selon l'une des revendications 1 à 5, dans lequel la portion de réception du moyen de stockage d'électricité (3) comporte lesdits moyens de connexion électrique (31) configurés pour être en contact avec les pôles (41) du moyen de stockage d'électricité (4) et pour recevoir de l'électricité du moyen de stockage d'électricité (4) de sorte que le passage du capot amovible (5) de la position de fermeture vers la position d'ouverture assure automatiquement la perte du contact électrique entre les pôles (41) du moyen de stockage de l'électricité (4) et lesdits moyens de connexion électrique (31), le passage de la position d'ouverture vers la position de fermeture assurant automatiquement la mise en contact électrique entre les pôles (41) du moyen de stockage d'électricité (4) et lesdits moyens de connexion électrique (31).

7. Boîtier d'appareil électronique (1) selon l'une des revendications 1 à 6, dans lequel le moyen de stockage d'électricité (4) comporte une batterie ou une ou plusieurs piles.

8. Boîtier d'appareil électronique (1) selon l'une des revendications 1 à 7, dans lequel les moyens de réception du moyen de stockage d'électricité (51) du capot amovible (5) comprennent un système de détrompeur, de sorte à s'assurer que le moyen de stockage d'électricité (4) est positionné de façon conforme sur le capot amovible (5).

9. Boitier selon la revendication 8 dans lequel ledit système (51) de guidage en coulissement entre le capot amovible (5) et le moyen de stockage de l'électricité (4) comporte :
- un rail supérieur (52) et un rail inférieur (53) ménagés sur la paroi intérieure du capot amovible (5),
- une nervure supérieure (42) ménagée sur le moyen de stockage d'électricité (4), destinée à coulisser dans ledit rail supérieur (52), et une nervure inférieure (43), ménagée sur le moyen de stockage d'électricité (4), destinée à coulisser dans ledit rail inférieur (53), une patte de détrompeur (P42) étant ménagée sur la nervure supérieure (42) ou sur la nervure inférieure (43) destinée à être reçue dans un logement détrompeur (L52) de forme correspondante, ménagé au niveau d'une extrémité longitudinale du rail (52) recevant ladite nervure (42), ladite patte de détrompeur (P42) étant configurée de sorte à empêcher l'insertion, au moins partiellement de la nervure supérieure (42) dans le rail inférieur (53) et/ou de la nervure inférieure (43) dans le rail supérieur (52), de sorte à constituer ledit système de détrompeur.

10. Boîtier d'appareil électronique (1) selon l'une des revendications 1 à 9, dans lequel le capot amovible (5) comporte une paroi d'obturation (54), sensiblement plane, s'étendant dans un plan (P54), configurée pour recouvrir la portion de réception du moyen de stockage d'électricité (3).

11. Boîtier d'appareil électronique (1) selon la revendication 10, dans lequel ladite direction (D1) s'étend perpendiculairement au plan (P54) dans un plan (P6), orthogonal au plan (P54).

12. Boîtier d'appareil électronique (1) selon la revendication 11 en combinaison avec la revendication 5, dans lequel ladite direction (D2) s'étend parallèlement au plan (P54) et parallèlement au plan (P6).

13. Boîtier d'appareil électronique (1) selon l'une des revendications 1 à 12, dans lequel la portion de réception du moyen de stockage d'électricité (3) comprend une paroi latérale (32) et le capot amovible (5) comprend un pourtour latéral (55), ladite paroi latérale (32) et ledit pourtour latéral (55) étant de forme complémentaire et étant dimensionnés de sorte à ce que ladite paroi latérale (32) et ledit pourtour latéral (55) soient en contact lorsque le capot amovible (5) se trouve en position de fermeture.

14. Boîtier d'appareil électronique (1) selon la revendication 13, dans lequel une bande en élastomère (56) est disposée sur le pourtour latéral (55) du capot amovible (5), de sorte à assurer l'immobilisation du capot amovible (5) par rapport à la portion de réception du moyen de stockage d'électricité (3) par frottement, lorsque le capot amovible (5) est en position de fermeture.

15. Serrure électronique comprenant un boîtier d'appareil électronique (1) selon l'une des revendications 1 à 14.
